# EUROPEAN PATENT SPECIFICATION

(11) **EP 0 660 883 B1**
(45) Date of publication and mention of the grant of the patent: **12.08.1998**
(21) Application number: 92901345.6
(22) Date of filing: 05.11.1991
(51) Int. Cl.: C22F 1/18, C21D 9/08, G21C 3/06

(54) **IMPROVED BETA-QUENCHING PROCESS FOR NUCLEAR FUEL CLADDING**
VERBESSERTES BETA-ABSCHRECKVERFAHREN FÜR KERNBRENNELEMENTE-HÜLLENROHRE
PROCEDE DE TREMPE BETA AMELIORE POUR LE GAINAGE D'ENCEINTES POUR COMBUSTIBLE NUCLEAIRE

(30) Priority: 07.11.1990 US 609862
(43) Date of publication of application: 05.07.1995
(73) Proprietor: Siemens Power Corporation, Richland, WA 99352 (US)
(72) Inventor: BUSCH, Raymond, A., Benton City, WA 99320 (US)
(74) Representative: Epping, Wilhelm, Dr.-Ing.
(86) International application number: US9108234
(87) International publication number: WO9208818

(56) References cited:
- DE-A- 2 951 102
- GB-A- 1 529 664
- US-A- 4 576 654
- PATENT ABSTRACTS OF JAPAN vol. 10, no. 23 (C-325)(2080) 29 January 1986 & JP,A,60 174 825 ( HITACHI SEISAKUSHO K.K. ) 9 September 1985

## Description

### FIELD OF THE INVENTION

This invention relates to a process for heat treating nuclear fuel assembly components and, more particularly, to a method for making cladding tubes which exhibit high resistance to nodular corrosion and irradiation growth in the vicinity of the outer surface of the cladding while avoiding oxidation and grain growth of the inner surface of the cladding. The invention also relates to fuel cladding formed by these processes.

### BACKGROUND OF THE INVENTION

The operating environment within a nuclear reactor is particularly hostile. A considerable effort has been expended in the nuclear reactor industry to arrive at materials which are able to withstand the combination of mechanical, thermal, chemical (corrosion) and radiation effects encountered in that environment.

At the present time, only a limited number of zirconium-based alloys are considered to be acceptable for fabricating cladding (tubes) which are used to enclose fissionable nuclear fuel. Those alloys are generally identified as Zircaloy materials (e.g., Zircaloy-2 and Zircaloy-4). The inner surface of such cladding may be provided with a barrier layer, such as zirconium metal having specified levels of impurities, to produce "barrier cladding". The barrier material is selected to resist interaction with the enclosed fuel materials, as well as gases and fluids which are encountered in the fuel rods.

It has become common practice to heat treat cladding (whether it is barrier type or standard, non-barrier type), by a "beta quenching" process in order to produce a corrosion resistant grain structure in the vicinity of the outer surface of the cladding. Beta-quenching is accomplished according to one known process by supplying heat (e.g., by an induction coil) to a limited zone on the outside surface of the cladding in an amount sufficient to raise that surface temperature to a level (such as 950°C or higher) at which the crystalline structure is transformed to the beta (body centered cubic) phase. The temperature range in which the beta phase is stable is referred to as the beta range. After being maintained at elevated temperature for several seconds, the outer surface of the cladding is rapidly quenched to a temperature (700°C or lower) which is below the beta range. A desired change in metallurgical state, including the production of small particle sizes in the portion of the cladding which is subjected to the beta range temperature, remains after the quenching step takes place. Various proposals have been made for effecting the beta-quenching steps at different stages of the multi-step process of forming cladding, including following initial billet formation or between successive pilgering steps or after a final pilgering pass (see, e.g., U.S. Patent No. 4,718,949).

In the case of standard cladding, the beta-quenching process frequently is employed at an early stage in the cladding forming process; that is, beta-quenching may be applied to a tube hollow which is one to three inches in outer diameter and of relatively short length. In that case, the entire structure is subjected to elevated temperature by the beta-quenching process. However, applying the step of beta-quenching at such an early stage in the case of barrier cladding has the disadvantages that the inner, high purity zirconium layer then would become oxidized and the inner layer would also experience grain growth. The oxidation is undesirable and would require that the inner diameter surface be cleaned, causing a consequent loss of material. The occurrence of grain growth in the vicinity of the inner surface typically results in defects (cracking) occurring after subsequent pilgering steps, thereby reducing the yield of acceptable tubing from the process.

It has previously been recognized that it is advantageous to maintain the inside surface of the cladding at a significantly lower temperature than the outer surface during the beta-quenching process to avoid these problems such as grain growth and undesired oxidation of the inside surface.

For example, when water at atmospheric pressure has been used to cool the inner surface of the cladding (see, for example, U.S. Patent No. 4,576,654), a relatively steep temperature gradient will be present between outer and inner walls of the cladding, since the inner wall typically will be in the vicinity of 100°C while the outer wall will be in the vicinity of about 1000°C.

In U.S. Patent No. 4,450,016, a method of manufacturing zirconium alloy fuel rod cladding is described in which standard, non-barrier cladding is subjected to a beta-quenching treatment prior to the final cold rolling step, the beta-quenching being accomplished by heating the tubing using a high frequency coil around the outside of the tubing and thereafter cooling the tubing to room temperature by spraying water on the tubing. The entire structure is thereby beta-quenched.

In U.S. Patent No. 4,810,461, several types of beta-quenching are described at an early stage of formation of non-barrier cladding, the process including heating material (ingot or tube shell) to the beta phase region and thereafter quenching the heated material by spraying with water. In addition, beta-quenching of an apparent barrier cladding is described in which the inner surface is cooled by flowing water while the outer surface undergoes induction heating and, thereafter, the outer surface is quenched by a water spray.

U.S. Patent No. 4,718,949 is directed to "temperature gradient annealing" after beta-quenching by heating the inside surface of cladding to a temperature above that of the outside surface. Several different cooling arrangements are described including spraying water on the outside surface of the tubing during the above-noted annealing, circulating water through the inside of the tubing during beta phase heating, blowing argon on the outside of the tube while heating the inside and flowing argon over the inside surface of the tube to prevent oxidation during temperature gradient annealing.

An undesirable effect of maintaining a low inner wall temperature during beta phase heating of the outer wall is that high power input is required to produce the desired outer wall temperature. There is also a risk that thermal runaway may occur if a critical heat flux is exceeded. Still further, the steep temperature gradient results in a reduction (compared to uniform or lesser gradient heating) in the fraction of the cladding wall thickness which is exposed to the beta phase conditions. That reduction may be expected to result in a loss in resistance to irradiation growth (which was an intended benefit of the beta-quenching process).

Higher temperatures (and a lesser gradient) can be attained by using pressurized cooling water. However, practical difficulties may be expected in providing high pressure connections to such apparatus. A practical upper limit of 300°-350°C for pressurized cooling water arrangements generally may be expected from the standpoint of costs.

Non-oxidizing gas flow arrangements also have been employed (see, for example, U.S. Patent No. 4,238,251) but typically result in an inside surface temperature of about 900°C, a level which is excessive and unacceptable for most barrier type materials from the point of view of desired grain structure.

Thus, it is desirable in a process for heat treating cladding by a beta-quenching process, to provide as much corrosion resistant grain structure in the vicinity of the outside surface and through the cladding wall thickness as is possible and, at the same time, to prevent significant undesirable oxidation (e.g., 0.2 microns or more thickness which is the approximate thickness that would require cleaning of the inner cladding surface) and significant undesirable grain growth (e.g., 20 microns which is the approximate grain size of which cracking of the tubing could occur due to subsequent working or forming). Furthermore, it is desireable to perform such a process as economically as possible.

Several further distinct advantages may be obtained, as will appear hereinafter, by providing a beta-quenching process in which the inside surface of the cladding is maintained at a temperature between the highest limit attainable using water cooling at atmospheric pressure and the lowest limit attainable using gas cooling.

### STATEMENT OF THE INVENTION

In accordance with one aspect of the present invention and as defined in claim 1, a beta-quenching process for nuclear fuel cladding comprises the steps of applying heat to at least a predetermined portion of the outer surface of the cladding to raise the temperature of such predetermined portion above the beta phase transformation level while supplying a cooling medium comprising a controlled amount of water droplets in a flowing gas to at least a portion of the inner surface of the cladding, to maintain such portion of the inner surface at a temperature in a range below a temperature at which undesired oxidation or grain growth occurs at the inner surface. Fuel cladding formed by this process, and as given in claim 1, is given by claim 5.

In accordance with a further aspect of the invention, thereafter, the predetermined portion of the outer surface is quenched by applying a cooling fluid to reduce the temperature of the outer surface rapidly to a level suitable to maintain the desired metallurgical structure produced as a result of being subjected to the beta phase transformation.

Preferred embodiments of the process defined in Claim 1 are given in the dependent claims.

### BRIEF DESCRIPTION OF THE DRAWINGS

In the drawing:
Figure 1 is an elevation view, partially in section, of a typical fuel assembly for a nuclear power reactor, the assembly being foreshortened in height and partially broken away for convenience and clarity;
Figure 2 is a sectional view, drawn to a larger scale than Figure 1, of a fuel rod employed in the assembly of Figure 1;
Figure 3 is a schematic diagram of a portion of an apparatus for heat treating fuel rod cladding in accordance with the present invention; and
Figure 4 is a diagram illustrating differences in temperature gradient conditions for two prior art techniques as compared to a cooling technique according to the present invention for the inner surface of cladding during a heating portion of a beta-quenching process.

### DETAILED DESCRIPTION

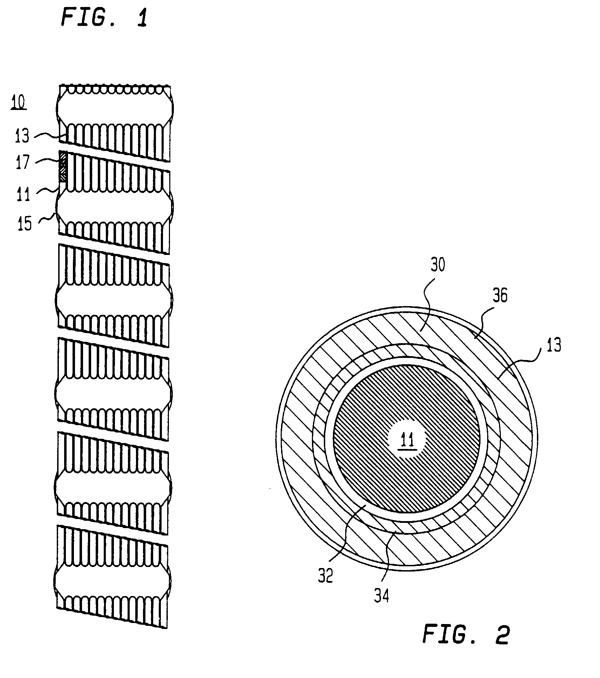

Referring to Figure 1, an 8 x 8 fuel bundle assembly is indicated generally by the reference numeral 10. The fuel assembly 10 includes upper and lower tie plates (not shown), capturing at opposite ends a plurality of fuel rods 13 of tubular shape. A plurality of grid spacers 15 is disposed along the length of the fuel rods 13. Spacers 15 form cells through which the fuel rods 13 extend. A flow channel (not shown) is disposed around the outer periphery of the bundle of fuel rods 13. For a more detailed description of such a structure, reference may be made to U.S. Patent No. 4,803,044 which is assigned to the same assignee as the present invention.

Each of the fuel rods 13 encloses a stack of fuel pellets 11. The pellets 11 in each stack are maintained in close proximity to each other by means of a spring 17 disposed between an upper end of the rod 13 and the uppermost one of the pellets 11.

Referring to Figure 2, the nuclear fuel pellets 11 are surrounded by tubular cladding 30. The cladding 30 encloses the fuel pellets 11, leaving a gap 32 between the pellets 11 and the inner surface 34 of cladding 30. The outer surface 36 (and a region adjacent thereto), as will be explained hereinafter, is heat treated prior to final shaping by a beta-quenching process according to the present invention.

The cladding 30 may be formed by any one of a number of conventional processes for converting ingots or tube hollows to thin-walled elongated tubes (see, for example, forming methods described in U.S. Patent No. 4,450,016 or No. 4,718,949).

In general, an ingot or rod of appropriate material (Zircaloy) is formed into a tube hollow and, in the case of barrier cladding, an inner lining such as relatively high purity zirconium is inserted into the hollow and is bonded to the inside surface in accordance with known techniques. The compound cladding billet is thereafter extruded and is subjected to a sequence (typically three) of rolling or pilgering steps to arrive at the desired final shape of the cladding. One or more intermediate annealing steps and a final annealing step typically are performed between and after the pilgering steps at a temperature such as 500°-675°C. Beta-quenching also is carried out at one of the stages prior to, between or after the pilgering steps.

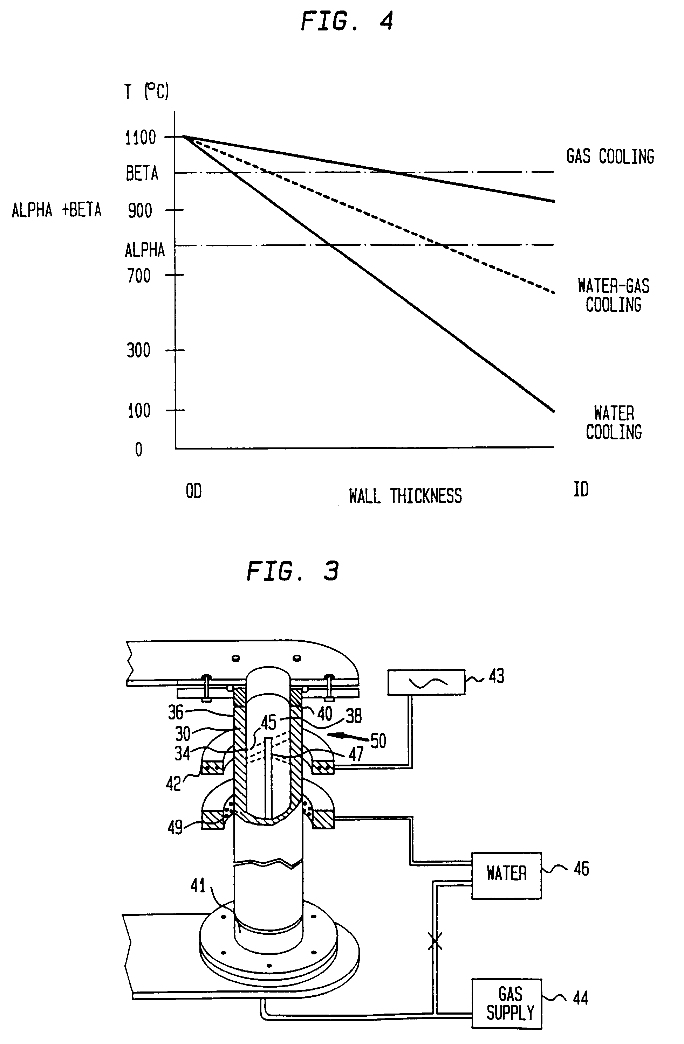

Referring to Figure 3, a beta-quenching process in accordance with the present invention will be described for the case where the cladding 30 has already undergone some forming steps and is generally tubular in shape with a relatively well-defined central opening 38.

In Figure 3, an apparatus is shown schematically for ease of understanding. It readily will be recognized, however, that various modifications may be made to the illustrated apparatus, depending upon whether the cladding 30 is to be moved while the heat treating apparatus is stationary or the cladding 30 is stationary while the heat treating apparatus is moved. Particular equipment configurations would depend on the stage in the overall process at which beta-quenching occurs and the resulting length of individual sections of the cladding 30 which are to be beta-quenched. Furthermore, while a single cladding tube is shown undergoing processing, it should be apparent that modifications may be made to permit processing of multiple tubes as well.

As is shown schematically in the partial cross-sectional view of Figure 3, the cladding 30 is supported, for example, by being held between flanges 40, 41. A predetermined zone (indicated generally by the reference numeral 50) of the outer surface 36 of cladding 30 is heated to a desired elevated temperature of 1000°C or above (e.g., 1000-1100°C) by means of an induction coil 42 which is energized from a source of electrical power 43. As noted above, relative motion between coil 42 and cladding 30 is required in order to heat treat the entire length of cladding 30 and, for example, coil 42 may be moved along the cladding 30.

In order to achieve a desired result of avoiding undesired grain growth or oxidation of the inner surface 34 of cladding 30, the inner surface 34 is cooled to the desired temperature, between 350°C and 650°C, and preferably less than 600°C by means of a combination of a steady flow of cooling gas (such as nitrogen) supplied from a cooling gas source 44 and a controlled amount of water droplets 45 supplied from a cooling water source 46. The gas and water droplets 45 are projected, for example, by means of a spray nozzle (or atomizer) 47 against the inner surface 34 in the zone 50 heated by induction coil 42. The amount of water droplets is adjusted to allow the temperature of the inner surface 34 (which may be a barrier layer) to rise only to a value which will not adversely affect grain growth or oxidation at the inner surface 34. For example, a temperature of 600°C is considered to be acceptable for inner surface 34 where an induction heating time of the order of less than ten seconds (preferably 4-5 seconds) is employed.

When the water droplets approach or contact inner wall 34, they are converted to steam which is carried away in the accompanying gas. The cooling medium (gas plus water droplets) applied to inner surface 34 thus serves to control the temperature of inner surface 34 as the outer surface 36 is raised above the beta phase transition temperature. The increase in temperature at inner surface 34 as compared to the prior art practice of water cooling alone will result in an approximate doubling of the thickness of wall which is transformed to beta phase by heating coil 42. The additional beta phase material has a beneficial effect on avoidance of irradiation growth of the tube as well.

In order to maintain the desired metallurgical characteristics produced in the vicinity of the outer surface 36 as a result of the beta phase transition, a further cooling water spray is supplied from a spray nozzle 49 located outside of outer surface 36 "downstream" of heating coil 42. The water from spray nozzle 49 causes the temperature of the outer surface 36 to decrease relatively rapidly, for example, from 1100°C to a temperature, for example, of 700°C or lower after exiting from heating coil 42. The water droplets supplied from outer spray nozzle 49 thus serve to quench the outer surface 36 to maintain the desired metallurgical condition of small particle size produced in the vicinity of outer surface 36 as a result of the beta phase transition. A desired high resistance to corrosion is produced at the outer surface 36 by subjecting the cladding 30 to this beta quenching process.

The cooling effect of the interior spray of water droplets 45, in combination with the gas from gas source 44, results in a reduction in the temperature gradient existing between inner surface 34 and outer surface 36 as compared to the case where a steady flow of cooling water alone is supplied through central opening 38. The foregoing process also has the added advantage that less power input (a reduction of, for example, 50%) is required in order to achieve the desired temperature conditions, as compared to the prior approach of cooling with water alone. The reduction of the temperature gradient across the wall thickness will reduce thermal stress in cladding 30 and will thereby reduce cracking and warping problems which might otherwise be encountered in subsequent forming and use of the cladding.

Referring to Figure 4, the temperature gradient associated with the prior approach of simple water cooling of the inner surface during the beta-quenching operation is illustrated, the temperature gradient associated with the approach of simply flowing a gas through the cladding is illustrated and the temperature gradient associated with the combined cooling provided by gas flow plus water droplets according to the present invention is illustrated. It can be seen from the plotted gradients that the depth of penetration of beta phase transformation from the outer surface (O.D.) is increased when using the combined gas plus water droplets cooling arrangement of the present invention as compared to the case for water cooling only. The use of gas alone is considered unacceptable since the resulting temperature at the inner surface is too high to produce the desired metallurgical results at the inner surface 34. The desired results of increased corrosion resistance and reduced irradiation growth are achieved by means of the invention without the undesired effects of interior surface oxidation or internal cracking.

## Claims

1. A beta quenching process for nuclear fuel cladding having inner and outer surfaces comprising the steps of:
- heating at least a predetermined portion of the outer surface of the cladding to raise the temperature of said predetermined portion above the beta transformation level to a temperature of 1000 °C or above, and, as the temperature of the outer surface is raised,
- cooling the inner surface of the cladding to a temperature in the range of 350 and 650 °C, by projecting by means of spray nozzle, a combination of a steady flow of cooling gas supplied from a cooling gas source and a controlled amount of water droplets supplied from a cooling water source against the inner surface.

2. A process according to claim 1 wherein after said heating a cooling fuid is applied to reduce the temperature of said outer surface rapidly to a level below said beta phase transformation level.

3. A process according to claim 2 wherein said reducing the temperature comprises spraying water onto said outer surface to reduce the temperature thereof below about 700 °C.

4. A process according to one of the preceding claims wherein said water droplets are projected at least in a zone opposite to that predetermined portion of said outer surface.

5. Fuel cladding formed by the process of one of the preceding claims.

## Patentansprüche

1. Betaabschreckverfahren für Kernbrennstoffhüllen mit einer Innen- und einer Außenfläche, das die folgenden Schritte umfaßt:
- mindestens einen vorbestimmten Teil der Außenfläche der Hülle zu erwärmen, um die Temperatur des vorbestimmten Teils über die Höhe der Betaumwandlung auf eine Temperatur von 1000°C oder darüber zu erhöhen und während der Erhöhung der Temperatur der Außenfläche
- die Innenfläche der Hülle auf eine Temperatur in einem Bereich zwischen 350 und 650°C abzukühlen, Indem durch eine Sprühdüse eine Kombination aus einer gleichmäßigen Strömung von Kühlgas, das aus einer Kühlgasquelle zugeführt wird, und einer kontrollierten Menge an Wassertröpfchen, die aus einer Kühlwasserquelle zugeführt werden, gegen die Innenfläche geschleudert wird.

2. Verfahren nach Anspruch 1, bei dem nach der Erwärmung ein Kühlmedium zugeführt wird, um die Temperatur der Außenfläche schnell auf eine Höhe unter der Betaphasenumwandlungshöhe zu verringern.

3. Verfahren nach Anspruch 2, bei dem die Verringerung der Temperatur das Sprühen von Wasser auf die Außenfläche zur Verringerung von deren Temperatur auf unter ca. 700°C umfaßt.

4. Verfahren nach einem der vorhergehenden Ansprüche, bei dem die Wassertröpfchen mindestens in einen Bereich, der dem vorbestimmten Bereich der Außenfläche gegenüberliegt, geschleudert werden.

5. Brennstoffhülle, die durch das Verfahren nach einem der vorhergehenden Ansprüche hergestellt worden ist.

## Revendications

1. Procédé de trempe bêta de gaine de combustible nucléaire ayant des surfaces intérieure et extérieure, qui consiste:
- à porter au moins une partie déterminée à l'avance de la surface extérieure de la gaine, en vue d'élever la température de cette partie déterminée à l'avance au-dessus du niveau de transformation bêta, à une température de 1000°C ou supérieure à 1000°C et, au fur et à mesure que la température de la surface extérieure s'élève,
- à refroidir la surface intérieure de la gaine à une température comprise entre 350 et 650°C, en projetant, au moyen d'une buse de projection, sur la surface intérieure une association d'un courant constant d'un gaz de refroidissement fourni par une source de gaz de refroidissement et d'une quantité commandée de gouttelettes d'eau fournie par une source d'eau de refroidissement.

2. Procédé suivant la revendication 1, qui consiste, après ce chauffage, à appliquer un fluide de refroidissement pour abaisser la température de la surface extérieure rapidement à un niveau inférieur au niveau de transformation en phase bêta.

3. Procédé suivant la revendication 2, qui consiste, pour abaisser la température, à projeter de l'eau sur la surface extérieure, afin d'en abaisser la température en-dessous de 700°C environ.

4. Procédé suivant l'une des revendications précédentes, qui consiste à projeter les gouttelettes d'eau au moins dans une zone opposée à la partie déterminée à l'avance de la surface extérieure.

5. Gaine de combustible formée par le procédé suivant l'une des revendications précédentes.
